# EUROPÄISCHE PATENTSCHRIFT

(11) **EP 2 888 493 B1**
(45) Veröffentlichungstag und Bekanntmachung des Hinweises auf die Patenterteilung: **12.10.2016**
(21) Anmeldenummer: 13762388.0
(22) Anmeldetag: 05.08.2013
(51) Int. Cl.: F16C 33/58, F16C 33/62, F16C 41/00, G01L 3/10, G01L 5/00

(54) **LAGERRING FÜR EIN LAGER, INSBESONDERE FÜR EIN WÄLZ- ODER GLEITLAGER**
BEARING RING FOR A BEARING, IN PARTICULAR FOR A ROLLING OR SLIDING BEARING
BAGUE DE ROULEMENT POUR PALIER, EN PARTICULIER POUR PALIER DE ROULEMENT OU LISSE

(30) Priorität: 24.08.2012 DE 102012215085
(43) Veröffentlichungstag der Anmeldung: 01.07.2015
(73) Patentinhaber: Schaeffler Technologies AG & Co. KG, 91074 Herzogenaurach (DE)
(72) Erfinder: DRESCHER, Klaus, 97490 Kützberg (DE); BENKERT, Frank, 97534 Waigolshausen (DE); HÖRNING,Philipp, 96050 Bamberg (DE); GERNER, Armin, 96178 Pommersfelden (DE); WITTMANN, Bernd, 96178 Pommersfelden (DE); BREHM, Horst, 96120 Bischberg (DE)
(86) Internationale Anmeldenummer: PCT/DE2013/200095
(87) Internationale Veröffentlichungsnummer: WO 2014/029396

(56) Entgegenhaltungen:
- DE-A1-102007 017 705
- DE-A1-102007 046 749
- DE-A1-102008 056 302
- US-A1- 2005 160 834

## Beschreibung

### Gebiet der Erfindung

Die Erfindung betrifft einen Lagerring mit zwei axial beabstandeten Lagerbahnen, insbesondere einen Lagerring für ein Wälzlager oder ein Gleitlager, nach Anspruch 1, sowie ein Lager nach Anspruch 10.

Aus der Praxis ist bekannt, ein drehendes Teil, insbesondere eine Welle, mittels mindestens eines Lagers, insbesondere mitttels eines Wälzlagers oder eines Gleitlagers, gegenüber einer Anschlusskonstruktion, insbesondere gegenüber einem Lagergehäuse, drehbar zu lagern. Das drehende Teil, insbesondere die Welle, überträgt dabei in vielen Fällen ein Drehmoment, das mindestens teilweise auch auf das Lager übertragen wird, so dass die Forderung auftritt, das Drehmoment im Bereich des Lagers, insbesondere im Bereich eines der Lagerringe des Wälz- oder Gleitlagers, zu erfassen.

Aus dem Stand der Technik ist das magnetostriktive Messprinzip zur Erfassung von Drehmomenten in Wellen grundsätzlich bekannt, wobei unter Ausnutzung des inversen magnetostriktiven Effektes mechanische Spannungen, die durch ein in eine Welle eingebrachtes Drehmoment erzeugt werden, in dem magnetostriktiven Material der Welle ein Magnetfeld erzeugen, das ein Maß für die mechanischen Spannungen und damit für das Drehmoment ist.

DE 101 36 438 A1 beschreibt mit Bezug auf Fig. 13 einen äußeren Lagerring eines einreihigen Wälzlagers, nämlich eines eines einreihigen Kugellagers, wobei der äußere Lagerring eine zirkuläre Magnetisierung aufweist, so dass unter Einwirkung einer radial angreifenden Kraft von außen auf den äußeren Lagerring eine zusätzliche axiale Magnetisierung entsteht, deren Magnetfeld durch ein magnetostatisches Sensorelement zwischen den beiden Lagerringen des Wälzlagers erfasst wird, so dass die Radialkraft auf das Wälzlager gemessen werden kann. Hier bleibt offen, wie das Drehmoment der in dem einreihigen Kugellager drehbar gelagerten Welle gemessen werden kann.

DE 697 32 183 T2 beschreibt ein zweireihiges Kegelrollenlager mit einem gemeinsamen ersten Lagerring und einem zweigeteilten zweiten Lagerring, wobei zwischen die beiden Teile des zweiten Lagerrings ein Abstandsring angeordnet ist, an dem ein Zahnrad befestigt ist, das als Signalgeber zur Erfassung der Drehgeschwindigkeit dient.

DE 10 2010 047 928 A1 beschreibt einen zweireihigen Lagerring eines Wälzlagers, insbesondere eines Kegelrollenlagers, wobei mittig zwischen den beiden Laufbahnen des Lagerrings, Sensoren wie beispielsweise Dehnungsmessstreifen oder piezokeramische Kraftsensoren auf der auf den anderen Lagerring weisenden Mantelfläche angeordnet sind.

JP 2001033322 AA (Abstract) beschreibt einen Lagerring eines einreihigen Kugellagers, wobei auf der zu dem anderen Lagerring des Kugellagers weisenden Mantelfläche eine strukturierte Beschichtung eines magnetoelastischen Materials aufgebracht ist, um als Signalgeber für einen Drehmoment-Sensor zu wirken, der das Drehmoment-abhängige Magnetfeld der strukturierten Beschichtung zwischen den beiden Lagerringen erfasst. Die strukturierte Beschichtung ist auf einem axial verlängerten Abschnitt zu einer Seite der Laubahn der kugelförmigen Wälzkörper angeordnet.

US 8,079,275 B2 beschreibt einen inneren Lagerring für ein als einreihiges Kugellager ausgebildetes Wälzlager, wobei außerhalb des Lagerrings, axial neben einer Stirnfläche des Innenrings, ein Ringkörper aus einem magnetostriktiven Material auf der Welle befestigt ist, und wobei mit dem anderen Lagerring ein magnetischer Sensor befestigt ist, wobei dieser Sensor entweder an einer axialen Verlängerung des äußeren Lagerrings bzw. an einer mit dem äußeren Lagerring befestigten Haltehülse so angeordnet ist, dass der magnetische Sensor dem magnetostriktiven Ringkörper radial gegenüberliegt.

DE 10 2006 054 179 A1 beschreibt eine Wellenanordnung, umfassend eine axial in eine Eingangswelle und eine Ausgangswelle geteilte Welle, ein Torsionselement, das mit der Eingangswelle und der Ausgangswelle drehmomentschlüssig verbunden ist, wobei das Torsionselement in einem Drehmoment-freien Zustand eine die Drehachse der Welle umlaufende permanente Magnetisierung aufweist, und einen als magnetischen Sensor ausgebildeten Drehmoment-Sensor, der in einem Drehmoment-belasteten Zustand des Torsionselementes ein außerhalb des Torsionselementes auftretendes Magnetfeld erfasst. Die Lagerung der Eingangswelle bzw. der Ausgangswelle wird durch von dem Torsionselement baulich getrennte, nicht näher beschriebene Lager bewirkt, so dass das Torsionselement als zu den Lagern zusätzlich vorzusehendes Bauteil vorgesehen sein muss.

Die DE102007 017 705 A1 zeigt ein Lagerring eines Wälzlagers, umfassend einen Ring aus einen magnetostriktiven Material, mit einer ersten Lagerbahn und einem permanent magnetischen magnetorestriktiven Ring.

### Aufgabe der Erfindung

Es ist die Aufgabe der Erfindung, die bauliche Integration eines Drehmomentsensors, der unter Ausnutzung des inversen magnetostriktiven Effektes ein drehmoment-abhängiges Magnetfeld erzeugt, in ein Lager zu verbessern.

### Zusammenfassung der Erfindung

Diese Aufgabe wird erfindungsgemäß gelöst durch einen Lagerring, insbesondere eines Wälzlagers oder eines Gleitlagers, umfassend ein Korpus aus einem magnetostriktiven Material, mit einer ersten Lagerbahn und einer zweiten, axial beabstandeten Lagerbahn, und eine zwischen den Lagerbahnen in das Material des Korpus eingeprägte permanente Magnetisierung, die eine Drehachse des Korpus umläuft.

Die zwischen die beiden Lagerbahnen des Lagerrings in das aus einem magnetostriktiven Material ausgebildete Korpus des Lagerrings eingeprägte, die Drehachse des Korpus umlaufende permanente Magnetisierung liefert das Drehmoment-abhängige Magnetfeld, wobei der Lagerring mit der das Drehmoment führenden Welle drehmomentschlüssig verbunden ist. Die Anordnung der permanenten Magnetisierung zwischen den beiden Lagerbahnen stellt sicher, dass der Einfluss der Rollkörper, wenn das Lager als Wälzlager ausgebildet ist, dessen Rollkörper entlang der Lagerbahn abrollen, bzw. des anderen Lagerrings, wenn das Lager als Gleitlager ausgebildet ist und im Bereich der Lagerbahn der Gleitkontakt mit dem anderen Lagerring des Gleitlagers auftritt, eliminiert wird.

Wird in einem drehmoment-freien Zustand der Welle durch einen der permanenten Magnetisierung radial gegenüberliegenden magnetischen Sensor dennoch ein Magnetfeld erfasst, das nicht auf Streufelder zurückzuführen ist, deutet dieses Magnetfeld darauf hin, dass im Bereich der permanenten Magnetisierung eine plastische Verformung des betreffenden Abschnittes des Lagerrings aufgetreten ist und somit der Lagerring mit einem Drehmoment belastet wurde, für das er nicht ausgelegt war.

Vorzugsweise ist vorgesehen, dass die permanente Magnetisierung eine oberflächennahe Teilmagnetisierung umfasst, die in einer ersten Umlaufrichtung die Drehachse umläuft, und eine radial beabstandete, oberflächenferne Teilmagnetisierung, die die Drehachse gegensinnig zu der oberflächennahen Teilmagnetisierung umläuft. Die beiden Teilmagnetisierungen sind so aufeinander abgestimmt, dass in einem drehmoment-freien Zustand der Welle bzw. des Lagerrings kein Drehmoment-erzeugtes Magnetfeld aus dem Lagerring austritt, so dass ein der permanenten Magnetisierung zugeordneter magnetischer Sensor allenfalls magnetische Störfelder, aber kein einem Drehmoment eindeutig zuordnbares Magnetfeld erfasst.

Vorzugsweise ist vorgesehen, dass die permanente Magnetisierung bzw. Teilmaghetisierung einen ersten magnetisierten Abschnitt, der die Drehachse in der ersten Umlaufrichtung umläuft, und einen axial beabstandeten zweiten magnetisierten Abschnitt, der die Drehachse gegensinnig zu der ersten Umlaufrichtung umläuft, aufweist. Die axiale Beabstandung der gegensinnigen Magnetisierungen bzw. Teilmagnetisierungen ermöglicht die Bestimmung des Drehsinns des Drehmomentes und ermöglicht weiter, den Einfluss von magnetischen Störfeldern zu unterdrücken, da beispielsweise nur die Differenz der Magnetfelder der beiden Magnetisierungen erfasst wird.

Vorzugsweise ist vorgesehen, dass ein Kopplungsabschnitt an oder nahe einem Ende des Korpus vorgesehen ist. Der Kopplungsabschnitt ist als an dem Ende des Korpus des Lagerrings, nämlich an der Stirnfläche des Lagerrings, bzw. nahe dem Ende des Korpus des Lagerrings, nämlich an einem an die Stirnfläche angrenzenden Abschnitt der Mantelfläche des Lagerrings, ausgebildeter Abschnitt vorgesehen, bei dem durch Ausformungen eine Struktur ausgebildet ist, an die ein Abschnitt einer Welle drehmoment-schlüssig befestigt sein kann. Die Welle wird dann durch die beiden Laufbahnen des Lagerrings zusammen mit dem anderen Lagerring gegenüber einer Anschlusskonstruktion, drehbar gelagert.

Vorzugsweise ist hinsichtlich des Kopplungsabschnittes vorgesehen, dass der Kopplungsabschnitt eine Passfeder umfasst, oder als Vielzahnverbindung bzw. als Vielkantverbindung ausgebildet ist.
Vorzugsweise ist vorgesehen, dass mindestens eine der Lagerbahnen, insbesondere beide Lagerbahnen gegenüber dem die permanente Magnetisierung aufweisenden Abschnitt radial, bezogen auf die Drehachse, versetzt angeordnet sind. Dabei kann die Materialdicke in dem die permanente Magnetisierung aufweisenden Abschnitt des Lagerrings beispielsweise durch eine materialabtragende Nachbearbeitung eines Standard-Lagerrings so eingestellt werden, dass in dem Korpus ein erhöhtes Torsionsmoment auftritt, so dass auch geringe Drehmomente leicht gemessen werden können, ohne die Funktion des Lagerrings als Teil des Lagers der Lagerung einzuschränken.

Vorzugsweise ist vorgesehen, dass das Korpus einstückig ausgebildet ist, so dass der Lagerring aus einem einzigen Teil gefertigt ist, das aus einem magnetostriktiven Material besteht, in das die mindestens zwei axial beabstandeten Lagerbahnen gefertigt sind und das eine Innenbohrung aufweist.

Vorzugsweise ist vorgesehen, dass die permanente Magnetisierung axial mittig zu den beiden Lagerbahnen angeordnet ist. Sind zwei axial beabstandete magnetisierte Abschnitte vorgesehen, sind diese magnetisierten Abschnitte zu beiden Seiten, insbesondere spiegelsymmetrisch, zu einer gedachten, axial mittigen Mittenebene angeordnet, zu der auch die beiden axial beabstandeten Lagerbahnen spiegelsymmetrisch angeordnet sind.

Die Erfindung betrifft weiter ein Lager, umfassend zwei Lagerringe, wobei der erste, insbesondere als Innenring ausgestaltete Lagerring erfindungsgemäß, wie vorstehend beschrieben, ausgebildet ist.

Weitere Vorteile und Merkmale ergeben sich aus den abhängigen Ansprüchen sowie aus der Beschreibung eines Ausführungsbeispiels der Erfindung.

Die Erfindung wird im folgenden unter Bezugnahme auf die anliegende Zeichnung näher beschrieben und erläutert.

### Kurze Beschreibung der Zeichnung

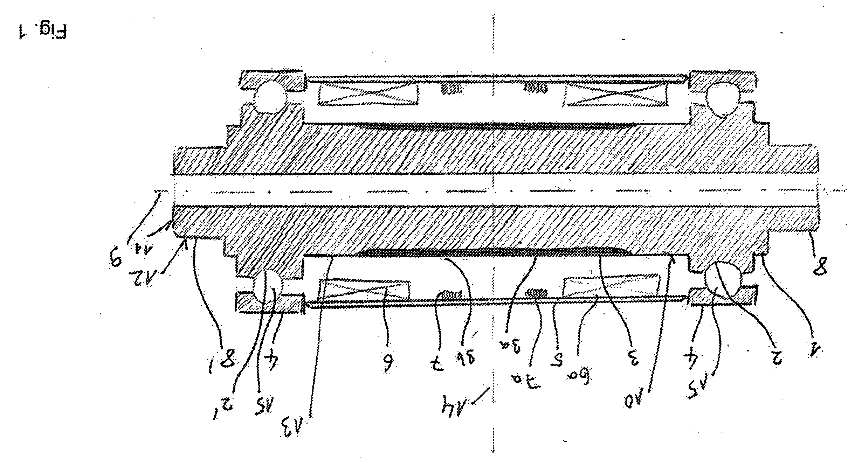

- Fig. 1: zeigt schematisch eine geschnittene Ansicht eines Ausführungsbeispiels eines erfindungsgemäßen Lagerrings sowie eines Ausführungsbeispiels eines erfindungsgemäßen Lagers.

### Detaillierte Beschreibung der Zeichnung

Fig. 1 zeigt einen Lagerring 1, der als Innenring eines zweireihigen Wälzlagers mit kugelförmigen Wälzkörpern ausgebildet ist, wobei der Lagerring 1 ein einstückiges Korpus aus einem magnetostriktiven Material umfasst, mit einer ersten, als Wälzbahn 2 ausgebildeten Lagerbahn und einer zweiten, axial beabstandeten, ebenfalls als Wälzlbahn 2' ausgebildeten Lagerbahn, und eine zwischen die beiden Wälzbahnen 2, 2' in das Material des Korpus des Lagerring 1 eingeprägte permanente Magnetisierung 3, die eine Drehachse 9 des Korpus kreisförmig umläuft.

Die permanente Magnetisierung 3 ist nahe einer von der Drehachse 9 fort weisenden, äußeren Mantelfläche 10 des Korpus zwischen den beiden Wälzbahnen 2, 2' ausgebildet und umfasst zwei zwischen den Wälzbahnen 2, 2' ausgebildete, axial beabstandete magnetisierte Abschnitte 3a, 3b, wobei im Bereich des ersten magnetisierten Abschnittes 3a der oberflächennahe Teil der Magnetisierung die Drehachse 9 in einer ersten Umlaufrichtung, nämlich im Uhrzeigersinn, und im Bereich des zweiten magnetisierten Abschnittes 3b gegensinnig zu der ersten Umlaufrichtung, nämlich im GegenUhrzeigersinn, umläuft.

In jedem der beiden axial beabstandeten magnetisierten Abschnitte 3a, 3b weist die permanente Magnetisierung 3 eine oberflächennahe Teilmagnetisierung auf, die in einer ersten Umlaufrichtung die Drehachse 9 umläuft, und eine radial beabstandete, oberflächenferne Teilmagnetisierung, die die Drehachse 9 gegensinnig zu der oberflächennahen Teilmagnetisierung umläuft. Konkret weist im Bereich des ersten magnetisierten Abschnittes 3a die permanente Magnetisierung die oben beschriebene, oberflächennahe, die Drehachse 9 im Uhrzeigersinn umlaufende Teilmagnetisierung und zusätzlich eine radial, von der oberflächennahen Teilmagnetisierung hin zu der Drehachse 9 beabstandete, die Drehachse gegensinnig, also im Gegenuhrzeigersinn umlaufende oberflächenferne Teilmagnetisierung auf. Entsprechend weist im Bereich des zweiten magnetisierten Abschnitts 3b die permanenten Magnetisierung 3 zusätzlich zu der oben beschriebenen, oberflächennahen, die Drehachse 9 im Gegenuhrzeigersinn umlaufenden Teilmagnetisierung eine radial zu dieser beabstndeten, die Drehachse 9 gegensinnig, also im Uhrzeigersinn umlaufende Teilmagnetisierung auf.

An jedem der beiden Enden des Korpus des Lagerrings 1 ist jeweils ein Kopplungsabschnitt 8, 8' ausgebildet, der zur drehmoment-festen Übertragung des Drehmomentes von einem an den Kopplungsabschnitt 8, 8' drehmomentschlüssig angebundenen Welle auf den Lagerring 1 vorgesehen ist. Die beiden Kopplungsabschnitte 8, 8' sind gleichartig ausgebildet, durch die jeweilige Lagerbahn 2, 2' von der permanenten Magnetisierung 3 getrennt und beispielsweise als auf der Stirnfläche 11 oder als auf der unmittelbar an die Stirnfläche 11 angrenzenden Abschnitt 12 der Mantelfläche 10 des Korpus des Lagerrings 1 ausgebildete Verformung oder Verprägung ausgebildet, insbesondere sind die beiden Kopplungsabschnitte 8, 8' gleichartig ausgebildet und als Teil einer formschlüssigen, kraftschlüssigen oder stoffschlüssigen Verbindung zu der bildlich nicht dargestellten, jeweiligen Welle beispielsweise als Teil einer Passfederverbindung, einer Vielkantverbindung oder einer Vielzahnverbindung ausgestaltet.

Bei dem Korpus des Lagerrings 1 ist weiter vorgesehen, dass beide Lagerbahnen 2, 2' bezogen auf den dazwischen liegenden, die permanente Magnetisierung 3 aufweisenden, Abschnitt 13 der Mantelfläche 10 radial, also bezogen auf die Drehachse 9 versetzt, und zwar von der Drehachse 9 weg versetzt, ausgebildet sind.

Das Korpus des Lagerrings 1 ist einstückig ausgebildet, insbesondere bei der Herstellung aus einem im wesentlichen zylindrischen Stück eines magnetostriktiven Materials gefertigt, bei dem die Lagerbahnen 2, 2' ausgebildet und der radial hin zu der Drehachse 9 versetzte mittlere Abschnitt 13, in dem die permanente Magnetisierung 3 ausgebildet sein soll, beispielsweise materialabtragend hergestellt wurden; dabei wurden auch die Kopplungsabschnitte 8, 8' zu den beiden Enden des Werkstücks ausgebildet, beispielsweise ebenfalls materialabtragend oder durch ein Pressverfahren. Es ist insbesondere möglich, ausgehend von einem zweireihigen Standard-Kugellager den zwischen den beiden Laufbahnen des Standard-Kugellagers durch ein Abtragen von Material als den mittleren Abschnitt 13 auszubilden, in dem in einem späteren Verfahrensschritt die permanente Magnetisierung 3 eingeprägt wird. Die Verringerung der Materialdicke in dem mittleren Abschnitt 13 erhöht die Verdrehung des Materials bei einem außen angelegten Drehmoment und somit die Empfindlichkeit der Anordnung.

Bei dem Korpus des Lagerrings 1 ist weiter vorgesehen, dass die permanente Magnetisierung 3 axial, also in Richtung der Drehachse 9, mittig zwischen den beiden Lagerbahnen 2, 2a angeordnet ist. Insbesondere sind die beiden magnetisierten Bereiche 3a, 3b der permanenten Magnetisierung 3 zu beiden Seiten einer gedachten Mittenebene 14 angeordnet, von der aus die beiden Lagerbahnen 2, 2a den gleichen Abstand aufweisen. Bezüglich dieser Mittenebene 14 sind die beiden Lagerbahnen 2, 2a sowie die magnetisierten Bereiche 3a, 3b spiegelsymmetrisch ausgebildet, wobei die magnetisierten Bereiche 3a, 3b einen nur geringen Abstand zu der Mittenebene 14 aufweisen und unmittelbar an die Mittenebene 14 angrenzen, so dass die permanente Magnetisierung 3 insgesamt axial mittig zwischen den beiden Lagerbahnen 2, 2a angeordnet ist.

Der als Innenring ausgebildete Lagerring 1 ist Teil eines Lagers, das zusätzlich zu dem Innenring 1 noch mindestens einen weiteren Lagerring, nämlich zwei axial beabstandete Außenringe 4a, 4a umfasst, deren jeweilige Wälzbahnen den Wälzbahnen 2, 2a des Innenrings 1 gegenüberliegen, so dass Wälzkörper 15 eine drehbare Lagerung des einen Lagerrings 1 relativ zu dem mindestens einen anderen Lagerring 4, 4a ermöglichen. Zwischen den beiden axial beabstandeten Außenringen 4, 4a ist eine zylindrische Hülse 5 als Träger angeordnet, an der zwei Paare von magnetische Sensoren 7, 7a angeordnet und den magnetisierten Abschnitten 3a, 3b der Magnetisierung 3 an dem Korpus des Innenrings 1 radial gegenüberliegend fixiert sind. Elektrisch mit den magnetischern Sensoren 7, 7a verbunden und ebenfalls an der Hülse 5 fixiert sind zwei Auswerteeinheiten 6, 6a, die jeweils das Messsignal des zugeordneten magnetischen Sensors 7, 7a, die bezogen auf die Drehachse 9 paarweise einander gegenüberliegen, erfassen, verarbeiten und auswerten.

Das Lager umfasst weiter bildlich nicht dargestellte weitere Sensoren, beispielsweise einen Temperatursensor bzw. einen Sensor zur Erfassung der Drehzahl und der Drehrichtung des drehenden Innenrings 1, wobei die Messwerte der weiteren Sensoren den Auswerteeinheiten 6, 6a zugeführt und dort verarbeitet werden.

### Die Erfindung funktioniert nun wie folgt:

An dem Kopplungsabschnitt 8' wird eine erste, drehmoment-beaufschlagte Eingangswelle drehfest, insbesondere also drehmoment-schlüssig, angeordnet, beispielsweise indem ein Ende der Eingangswelle form-, kraft- oder reibschlüssig mit dem Abschnitt 12 des Lagerrings 1 verbunden wird. An dem anderen Kopplungsabschnitt 8 wird eine zweite, anzutreibende Welle, als Ausgangswelle befestigt. Beide Wellen, die Eingangswelle und die Ausgangswelle, werden den Lagerring 1 sowie die Außenringe 4, 4' gegenüber einem nicht dargestellten, ortsfesten Gehäuse drehbar um die Achse 9 gelagert. Der Lagerring 1 des Lagers ist damit mit dem drehmomentbeaufschlagten Teil, also der von dem Lagerring 1 drehbar gelagerten Welle, drehfest verbunden.

Liegt in der Eingangswelle kein Drehmoment vor, erfassen die magnetischen Sensoren 7, 7a kein Magnetfeld, ausgenommen vielleicht Störfelder aufgrund von Resten des nicht vollständig abgeschirmten Erdmagnetfeldes. Die jeweilige oberflächennahe bzw. oberflächenferne Teilmagnetisierung der axial beabstandeten Bereiche 3a, 3b der permanenten Magnetisierung 3 sind in Betrag, Richtung und Tiefe so aufeinander abgestimmt, dass dann, wenn in der Eingangswelle kein Drehmoment vorliegt und damit auch kein Drehmoment auf das Korpus des Lagerrings 1 übertragen wird, das von der permanenten Magnetisierung 3 bewirkte außerhalb des Korpus des Lagerrings auftretende Magnetfeld verschwindet und allenfalls Störfelder zu erfassen sind.

Wird über die Eingangswelle durch das Korpus des Lagerrings 1 ein Drehmoment auf die Ausgangswelle übertragen, also insbesondere von der Eingangswelle ein Drehmoment in das Korpus des mit dem Drehmoment-führenden Teil, nämlich der Eingangswelle, drehfest verbundenen Lagerrings 1 eingeleitet, tritt aufgrund der magnetostriktiven Eigenschaften des Materials des Korpus des Lagerrings 1 durch den inversen magnetostriktiven Effekt im Bereich des ersten magnetisierten Abschnitts 3a ein erstes Netto-Magnetfeld und im Bereich des zweiten magnetisierten Abschnitts 3b ein zweites Netto-Magnetfeld auf, wobei die jeweiligen axialen, also parallel zu der Drehachse 9 gerichteten, Anteile der beiden Netto-Magnetfelder außerhalb des Korpus des Lagerrings 1 durch die magnetischen Sensoren 7, 7a erfasst werden. Die jeweiligen Teilmagnetisierungen der beiden magnetisierten Bereiche 3a, 3b sind zueinander so abgestimmt, dass die axialen Komponenten unterschiedliche Richtung, aber gleichen Betrag aufweisen, so dass die Auswerteeinheiten 6, 6a durch Differenzbildung ein um den Beitrag der externen Störfelder bereinigtes Signal erfassen und verarbeiten, das dem Drehmoment in dem Korpus des Lagerrings 1 entspricht.

Ist kein Drehmoment in dem Korpus des Lagerrings 1 eingeleitet und erfasst mindestens einer der beiden magnetischen Sensoren 7, 7a dennoch ein Netto-Magnetfeld außerhalb des Korpus des Lagerrings 1, das nicht auf Störfelder zurückzuführen ist, kann dieser magnetische Sensor eine Beschädigung der permanenten Magnetisierung 3 durch ein zu hohes Drehmoment anzeigen, so dass die magnetischen Sensoren 7, 7a auch als eine Überlastanzeige vorgesehen sein können. Die Materialdicke des Korpus des Lagerrings 1 kann entsprechend so ausgelegt sein, dass innerhalb eines zulässigen Bereiches für das Drehmoment keine dauerhafte Verformung des Materials auftritt. Weiter kann an dem Kopplungsabschnitt 8', an dem das äußere Drehmoment in den Lagerring 1 eingeleitet wird, eine Kupplung, speziell eine Rutschkupplung, vorgesehen sein, die das in das Korpus des Lagerrings 1 eingeleitete Drehmoment auf einen Wert unterhalb eines zulässigen Höchstwertes begrenzt.

Bei dem vorstehend beschriebenen Ausführungsbeispiel umfasste das Lager einen beide Lagerbahnen 2, 2' aufweisenden, gemeinsamen Innenring, aber zwei axial beabstandete, durch die Hülse 5 baulich getrennte Außenringe 4, 4'. Es versteht sich, dass ein gemeinsamer Außenring vorgesehen sein kann, der beiden Lagerbahnen an dem Außenring aufweist.

Bei dem vorstehend beschriebenen Ausführungsbeispiel war der mit dem Drehmoment-führenden Teil, nämlich der Eingangswelle, drehfest verbundene Lagerring 1 als Innenring des Lagers ausgebildet, der die Eingangswelle gegenüber einem stehenden Gehäuse mittels der Außenringe 4, 4a lagerte. In einem abweichenden Ausführungsbeispiel kann vorgesehen sein, dass der Innenring des Lagers feststehend und der Außenring des Lagers drehend ausgebildet ist; in diesem Fall ist die permanente Magnetisierung an dem Korpus des Außenrings ausgebildet, da der Außenring mit dem Drehmoment-führenden Teil, nämlich der Eingangswelle, drehfest verbunden ist.

Bei dem vorstehend beschriebenen Ausführungsbeispiel waren die Lagerbahnen 2, 2' als Wälzbahnen eines Wälzlagers mit insbesondere kugelförmigen Wälzkörpern 15 ausgebildet. Es versteht sich, dass mindestens eine der beiden Lagerbahnen, insbesondere sämtliche Lagerbahnen, auch als Gleitbahnen ausgebildet sein können und als Gleitflächen für einen Gleitpartner des anderen Lagerrings des Lagers ausgestaltet sind.

Bei dem vorstehend beschriebenen Ausführungsbeispiel war der Kopplungsabschnitt 8, 8' als Vielzahnverbindung bzw. als Vielkantverbindung ausgebildet. Es versteht sich, dass der Kopplungsabschnitt auch ein Gewinde umfassen kann, in das ein Gegengewinde der Eingangs- bzw. der Ausgangswelle durch Einschrauben befestigt ist. Sofern Drehmomente in beiden Drehrichtungen übertragen werden sollen, ist das Anzugsdrehmoment zur Festlegung des Gegengewindes der Welle in dem Gewinde des Kopplungsabschnittes höher auszulegen als das maximale zu übertragende Drehmoment. Alternativ oder ergänzend hierzu sind Rastkörper wie Kugeln oder Bolzen vorgesehen, die die Verbindung der beiden Gewindeabschnitte fixieren.

### Bezugszeichenliste

- 1: Lagerring
- 2, 2': Lagerbahn
- 3: Magnetisierung
- 3a, 3b: magnetisierter Abschnitt
- 4, 4a: Außenring
- 5: Hülse
- 6, 6a: Auswerteeinheit
- 7, 7a: magnetischer Sensor
- 8, 8': Kopplungsabschnitt
- 9: Drehachse
- 10: äußere Mantelfläche
- 11: Stirnfläche
- 12: Abschnitt
- 13: mittlerer Abschnitt
- 14: Mittenebene
- 15: Wälzkörper

## Patentansprüche

1. Lagerring, insbesondere eines Wälzlagers oder eines Gleitlagers, umfassend ein Korpus aus einem magnetostriktiven Material, mit einer ersten Lagerbahn (2) und einer zweiten, axial beabstandeten Lagerbahn (2'), und
eine zwischen den Lagerbahnen (2, 2') in das Material des Korpus eingeprägte permanente Magnetisierung (3), die eine Drehachse (9) des Korpus umläuft.

2. Lagerring nach Anspruch 1, **dadurch gekennzeichnet, dass** die permanente Magnetisierung (3) einen ersten magnetisierten Abschnitt (3a), der die Drehachse (9) in der ersten Umlaufrichtung umläuft, und einen axial beabstandeten zweiten magnetisierten Abschnitt (3b), der die Drehachse (9) gegensinnig zu der ersten Umlaufrichtung umläuft, aufweist.

3. Lagerring nach Anspruch 1 oder 2, **dadurch gekennzeichnet, dass** die permanente Magnetisierung (3) eine oberflächennahe Teilmagnetisierung umfasst, die in einer ersten Umlaufrichtung die Drehachse (9) umläuft, und eine radial beabstandete, oberflächenferne Teilmagnetisierung, die die Drehachse (9) gegensinnig zu der oberflächennahen Teilmagnetisierung umläuft.

4. Lagerring nach einem der Ansprüche 1 bis 3, **dadurch gekennzeichnet, dass** ein Kopplungsabschnitt (8, 8') an oder nahe einem Ende des Korpus vorgesehen ist.

5. Lagerring nach Anspruch 4, **dadurch gekennzeichnet, dass** der Kopplungsabschnitt eine Passfeder umfasst, oder als Vielzahnverbindung bzw. als Vielkantverbindung ausgebildet ist.

6. Lagerring nach Anspruch 4, **dadurch gekennzeichnet, dass** der Kopplungsabschnitt ein Gewinde umfasst.

7. Lagerring nach einem der Ansprüche 1 bis 6, **dadurch gekennzeichnet, dass** mindestens eine der Lagerbahnen (2, 2'), insbesondere beide Lagerbahnen (2, 2') gegenüber dem die permanente Magnetisierung (3) aufweisenden Abschnitt (13) radial, bezogen auf die Drehachse (9), versetzt angeordnet sind.

8. Lagerring nach einem der Ansprüche 1 bis 7, **dadurch gekennzeichnet, dass** das Korpus einstückig ausgebildet ist.

9. Lagerring nach einem der Ansprüche 1 bis 8, **dadurch gekennzeichnet, dass** die permanente Magnetisierung (3) axial mittig zu den beiden Lagerbahnen (2, 2') angeordnet ist.

10. Lager, umfassend zwei Lagerringe, wobei der erste, insbesondere als Innenring ausgestaltete Lagerring (1) nach einem der Ansprüche 1 bis 9 ausgebildet ist.

## Claims

1. Bearing ring, in particular of a rolling bearing or a sliding bearing, comprising a body composed of a magnetostrictive material, with a first bearing raceway (2) and a second axially spaced apart bearing raceway (2'), and
a permanent magnetization (3) which is incorporated between the bearing raceways (2, 2') into the material of the body and runs around an axis of rotation (9) of the body.

2. Bearing ring according to Claim 1, **characterized in that** the permanent magnetization (3) has a first magnetized portion (3a) which runs around the axis of rotation (9) in the first circumferential direction and an axially spaced apart second magnetized portion (3b) which runs around the axis of rotation (9) in the opposite direction to the first circumferential direction.

3. Bearing ring according to Claim 1 or 2, **characterized in that** the permanent magnetization (3) comprises a partial magnetization close to the surface which runs around the axis of rotation (9) in a first circumferential direction and a radially spaced apart partial magnetization distant from the surface which runs around the axis of rotation (9) in the opposite direction to the partial magnetization close to the surface.

4. Bearing ring according to one of Claims 1 to 3, **characterized in that** a coupling portion (8, 8') is provided at or close to an end of the body.

5. Bearing ring according to Claim 4, **characterized in that** the coupling portion comprises a feather spring or is formed as a multi-tooth connection or as a multi-edge connection.

6. Bearing ring according to Claim 4, **characterized in that** the coupling portion comprises a thread.

7. Bearing ring according to one of Claims 1 to 6, **characterized in that** at least one of the bearing raceways (2, 2'), in particular both bearing raceways (2, 2') are arranged radially offset in relation to the axis of rotation (9) opposite the portion (13) having the permanent magnetization (3).

8. Bearing ring according to one of Claims 1 to 7, **characterized in that** the body is formed in one piece.

9. Bearing ring according to one of Claims 1 to 8, **characterized in that** the permanent magnetization (3) is arranged axially centrally in relation to the two bearing raceways (2, 2').

10. Bearing, comprising two bearing rings, wherein the first bearing ring (1), configured in particular as an inner ring, is formed according to one of Claims 1 to 9.

## Revendications

1. Bague de roulement pour palier, en particulier pour palier de roulement ou palier lisse, comprenant :
un corps composé d'une matière magnéto-constrictive, avec un premier chemin de roulement (2) et un deuxième chemin de roulement (2') placé à une certaine distance dans le plan axial : et
une aimantation (3) permanente gaufrée dans la matière du corps entre les chemins de roulement (2, 2') et circulant autour d'un axe de rotation (9) du corps.

2. Bague de roulement pour palier selon la revendication 1, **caractérisée en ce que** l'aimantation (3) comporte une première section aimantée (3a) circulant autour de l'axe de rotation (9) dans la première direction de circulation et une deuxième section aimantée (3b) placée à une certaine distance dans le plan axial circulant autour de l'axe de rotation (9) dans le sens contraire de la première direction de circulation.

3. Bague de roulement pour palier selon la revendication 1 ou 2, **caractérisée en ce que** l'aimantation permanente (3) comprend une aimantation partielle proche de la surface circulant autour de l'axe de rotation (9) dans une première direction de circulation et une aimantation partielle éloignée de la surface placée à une certaine distance dans le plan radial circulant autour de l'axe de rotation (9) dans le sens contraire de l'aimantation partielle proche de la surface.

4. Bague de roulement pour palier selon l'une quelconque des revendications 1 à 3, **caractérisée en ce qu'**une section de couplage (8, 8') est prévu au niveau d'une extrémité du corps ou à proximité de celle-ci.

5. Bague de roulement pour palier selon la revendication 4, **caractérisée en ce que** la section de couplage comprend une clavette ou est réalisé sous la forme d'une liaison à dents multiples et/ou d'une liaison à arêtes multiples.

6. Bague de roulement pour palier selon la revendication 4, **caractérisée en ce que** la section de couplage comprend un filet.

7. Bague de roulement pour palier selon l'une quelconque des revendications 1 à 6, **caractérisée en ce qu'**au moins un des deux chemins de roulement (2, 2'), en particulier les deux chemins de roulement (2, 2'), sont disposés de façon décalée dans le plan radial, par rapport à l'axe de rotation (9), en vis-à-vis de la section (13) comportant l'aimantation permanente (3).

8. Bague, de roulement pour palier selon l'une quelconque des revendications 1 à 7, **caractérisée en ce que** le corps est réalisé d'un seul tenant.

9. Bague de roulement pour palier selon l'une quelconque des revendications 1 à 8, **caractérisée en ce que** l'aimantation permanente (3) est disposée dans le plan axial de façon centrale par rapport aux deux chemins de roulement (2, 2').

10. Palier de roulement, comprenant deux bagues de roulement pour palier, la première bague de roulement pour palier (1) configurée en particulier sous la forme d'une bague intérieure étant réalisée selon l'une quelconque des revendications 1 à 9.
